# EUROPÄISCHE PATENTSCHRIFT

(11) **EP 2 099 628 B1**
(45) Veröffentlichungstag und Bekanntmachung des Hinweises auf die Patenterteilung: **12.01.2011**
(21) Anmeldenummer: 07817399.4
(22) Anmeldetag: 14.11.2007
(51) Int. Cl.: B60J 5/10

(54) **AUFHÄNGUNG FÜR EINE GETEILT AUFKLAPPBARE FAHRZEUGHECKKLAPPE**
SUSPENSION FOR A DIVIDED HINGED TAILGATE OF A MOTOR VEHICLE
ATTACHE POUR UN HAYON RELEVABLE DE VÉHICULE EN PLUSIEURS PARTIES

(30) Priorität: 04.12.2006 CZ 20060771
(43) Veröffentlichungstag der Anmeldung: 16.09.2009
(73) Patentinhaber: Skoda Auto a.s., 293 60 Mladá Boleslav (CZ)
(72) Erfinder: ERBEN, Karel, 29301 Mladá Boleslav (CZ); DEMEL, Jan, 294 04 Dolní Bousov (CZ)
(86) Internationale Anmeldenummer: PCT/CZ2007/000103
(87) Internationale Veröffentlichungsnummer: WO 2008/067779

(56) Entgegenhaltungen:
- WO-A-98/30407
- DE-A1- 4 400 374
- DE-A1-102006 013 735

## Beschreibung

### Bereich Technik

Die Erfindung betrifft eine Aufhängung für eine geteilte aufklappbare Fahrzeugheckklappe nach dem, in der DE 10 2006 013 735 A offenbarten Oberbegriff von Anspruch 1. Die Erfindung betrifft auch eine entsprechende Fahrzeugheckklappe und ein Fahrzeug mit einer solchen Heckklappe.

### Bestehender Stand der Technik

In Praxis ist aus dem Stand der Technik die Aufhängung bekannt, die den Oberteil und den Unterteil der geteilten aufklappbaren Fahrzeugheckklappe verbindet und durch Rahmen der zum Oberteil der aufklappbaren Fahrzeugheckklappe befestigt ist und durch Arm in Form U, der zum unteren. Deckel der aufklappbaren Fahrzeugheckklappe und drehbar zum Rahmen befestigt ist, gebildet ist.

In einer Ausführung dieser bekannten Aufhängung ist das Sicherungselement zum Rahmen drehbar befestigt, das mit Ausnehmung versehen ist, in die der zum Arm fest angeschlossene Zapfen ineinander greift. Das Sicherungselement wird mittels Betätigungsmechanismus gedreht, der zur Karosserie nur bei geschlossener aufklappbarer Fahrzeugheckklappe bzw. wenigstens deren Oberteils, wann der Mitnehmer des Sicherungselements in den Betätigungsmechanismus ineinander greift, befestigt ist.

Bei Umdrehung des Sicherungselements in erste Endlage wird der zum Arm angeschlossene Zapfen gelöst und der Arm kann sich gegenüber dem Rahmen drehen resp. der Unterteil kann sich gegenüber dem Oberteil der aufklappbaren Fahrzeugheckklappe drehen und so kann nur Unterteil der aufklappbaren Fahrzeugheckklappe geöffnet werden. Bei Umdrehung des Sicherungselements in zweite Endlage greift der zum Arm angeschlossene Zapfen in die Ausnehmung des Sicherungselements ineinander, wodurch der Arm und der Rahmen, resp-Unterteil und Oberteil der aufklappbaren Fahrzeugheckklappe, fest verbunden sind und kann die ganze aufklappbare Fahrzeugheckklappe d.h. Unterteil und auch Oberteil geöffnet werden.

Nachteil dieser Lösung ist, dass in geöffneter Position der ganzen aufklappbaren Fahrzeugheckklappe das Sicherungselement in seiner Position auf keine Weise gegen Umdrehung gesichert ist und so zu dessen unbeabsichtigter Umdrehung aus zweiter Endlage, in der das Element den Zapfen des Armes in Richtung zu erster Endlage sichert, zur Lösung des Zapfens und dadurch auch zu Lösung der Verbindung des Oberteils und des Unterteils und folgendem "Bruch" des Deckels kommen kann, was die Verletzung der Bedienung und mühsames wiederholtes Schließen des Deckels als Folge haben kann.

### Das Wesen der Erfindung

Oben angeführte Nachteile werden von den Merkmalen im kennzeichnenden Teil des Anspruchs 1 beseitigt.

Die Aufhängung der geteilten aufklappbaren Fahrzeugheckklappe wird durch den Rahmen, der zum Oberteil der aufklappbaren Fahrzeugheckklappe befestigt ist und durch den Arm, der zum Unterteil der aufklappbaren Fahrzeugheckklappe und zum Rahmen drehbar befestigt ist, gebildet. Der Arm ist mit Zapfen und der Rahmen mit drehbaren Sicherungselement mit Längsausnehmung für Aufnahme dieses Zapfens versehen, wobei das Sicherungselement weitere mit dem Mitnehmer für Drehmomentübertragung von Betätigungseinrichtung, die an der Karosserie angebracht ist, versehen ist, sodass der Mitnehmer mit Karosserie im Kontakt nur bei geschlossenem Oberteil der aufklappbaren Fahrzeugheckklappe ist. Die Sicherheitseinrichtung enthält eine zum Rahmen befestigte Klinke für Sicherung des Sicherungselements gegen Umdrehung, mit Vorteil in solcher Position der Umdrehung des Elements, in der sich der Zapfen im Raum des geschlossen Ende der Längsausnehmung befindet. Die Klinke ist mit elastischem Element, das sie in gesicherte Position verschiebt, mit Vorteil mit Drehungsfeder, versehen. Elastisches Element kann auch durch elastischen Teil der Klinke gebildet werden. In die entsicherte Position, in der die Drehung des Sicherungselements ermöglicht ist, wird die Klinke automatisch beim Schließen wenigstens des Oberteils der aufklappbaren Fahrzeugheckklappe verschoben.
Die Klinke kann mit einem Zapfen versehen werden, der beim Schließen wenigstens des Oberteils der aufklappbaren Fahrzeugheckklappe auf die Abdeckung der Betätigungseinrichtung mit Vorsprung noch vor dessen völliger Schließung aufliegt, wobei bei weiterer Verschiebung des Oberteils der aufklappbaren Fahrzeugheckklappe bis dessen völliger Schließung sich der Zapfen resp. die Klinke gegenüber dem Rahmen bewegt und die Klinke sich in entsicherte Position verschiebt.
In günstiger Ausführung erweist die Klinke die Form eines einarmigen Hebels mit einem Ende, das drehbar auf dem Rahmen gelagert ist, und an dessen anderem Ende sich eine Nase befindet, die in die im Sicherungselement durchgeführte Ausnehmung ineinander greift, und zwischen diesen Enden der Zapfen für Entsicherung der Klinke um Abdeckung der Betätigungseinrichtung angebracht ist. Bei anderer Konstruktion der hinteren Aufhängung, wann der Mitnehmer zum Sicherungselement mittels eines Hilfshebels angeschlossen ist, der axial vom Sicherungselement entfernt ist, kann die Klinke so angebracht werden, dass sie die Bewegung dieses Hebels direkt blockiert.

Beim Öffnen des ganzen aufklappbaren Deckels, wann der Zapfen durch Längsausnehmung des Sicherungselements aufgenommen ist und die gegenseitige Bewegung des oberen Teils und des unteren Teils des Deckels so blockiert wird, springt die Klinke, durch Wirkung der Feder, in die Ausnehmung im Sicherungselement ein und verhindert so dessen weitere Verdrehung. Dadurch ist die unbeabsichtigte Lösung des Oberteils und des Unterteils der aufklappbaren Fahrzeugheckklappe beim Öffnen und in geöffneter Position verhindert. Zur Entsicherung der Klinke und Ermöglichung der Umdrehung des Sicherungselements und gegenseitiger Bewegung beider Teile des aufklappbaren Teils kommt beim Schließen der aufklappbaren Fahrzeugheckklappe, wann der Zapfen an der Klinke noch vor deren Schließen auf die Abdeckung der Betätigungseinrichtung aufliegt und bei weiterer Bewegung in der Richtung nach unten die Klinke aus der Ausnehmung im Sicherungselement in die entsicherte Position aufgehoben wird. So ist die Drehung des Sicherungselements über Mitnehmer mittels des Betätigungsmechanismus und dessen Umdrehung in die Position wann der Zapfen sich außer Längsausnehmung befindet gesichert, der Arm wird vom Rahmen gelöst und es kann nur der Unterteil gesondert geöffnet werden.

### Übersicht der Bilder auf der Zeichnung

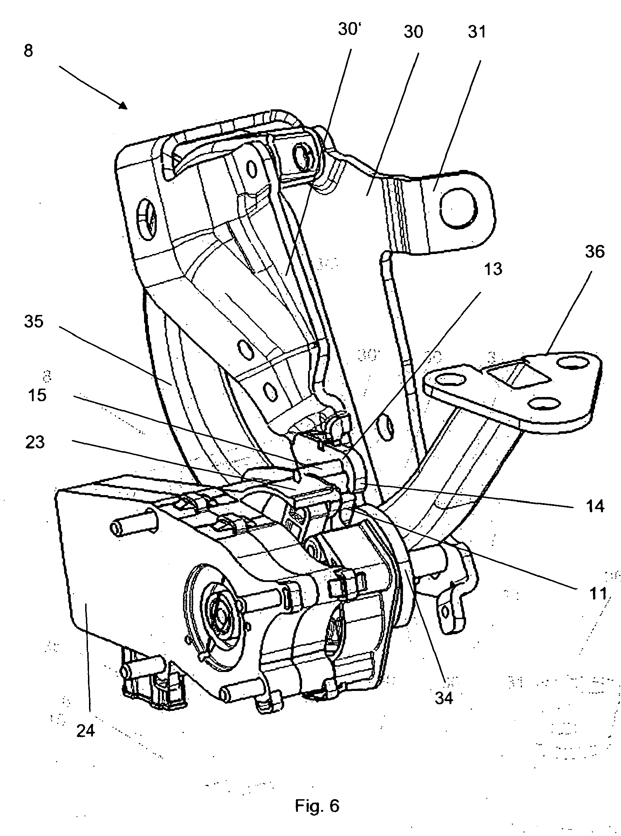

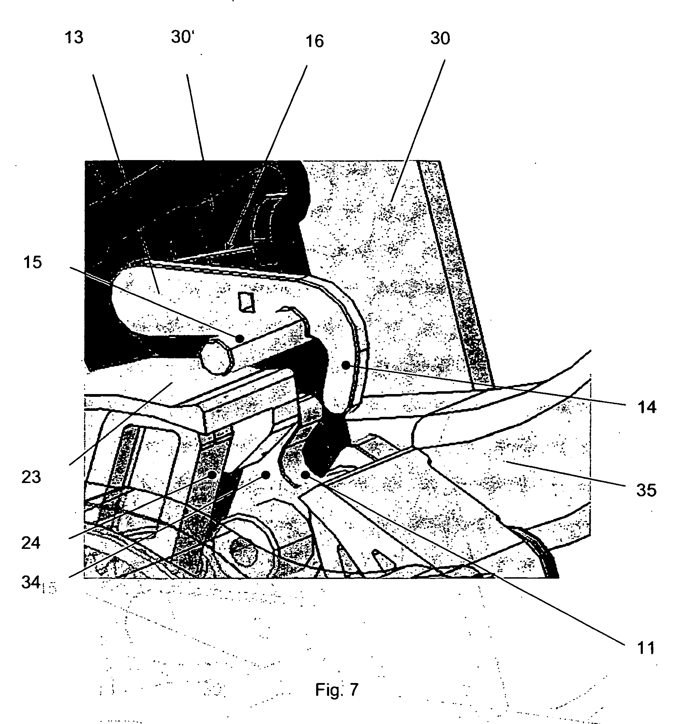

Die Erfindung wird näher mittels schematischer Zeichnungen erläutert, auf denen die Abb. 1 die aufklappbare Fahrzeugheckklappe in geschlossener Lage darstellt. Auf Abb. 2 ist die aufklappbare Fahrzeugheckklappe mit geöffnetem nur Unterteil und auf Abb. 3 ist die aufklappbare Fahrzeugheckklappe geöffnet als Ganzes. Auf Abb. 4 ist die Anordnung der Aufhängung, die den unteren und oberen Deckel der aufklappbaren Fahrzeugheckklappe in der Position deren Öffnung dargestellt. Auf Abb. 5 ist die Sicherungsklinke detailliert dargestellt. Auf Abb. 6 ist die Ansicht an die Aufhängung der aufklappbaren Fahrzeugheckklappe im geschlossenen Zustand dargestellt, die dann im Detail auf Abb. 7 dargestellt ist. Abb. 8 stellt andere Ausführung der Aufhängung dar, bei der die Lösung nach dieser Erfindung auch appliziert werden kann.

### Beispiele der Ausführung der Erfindung

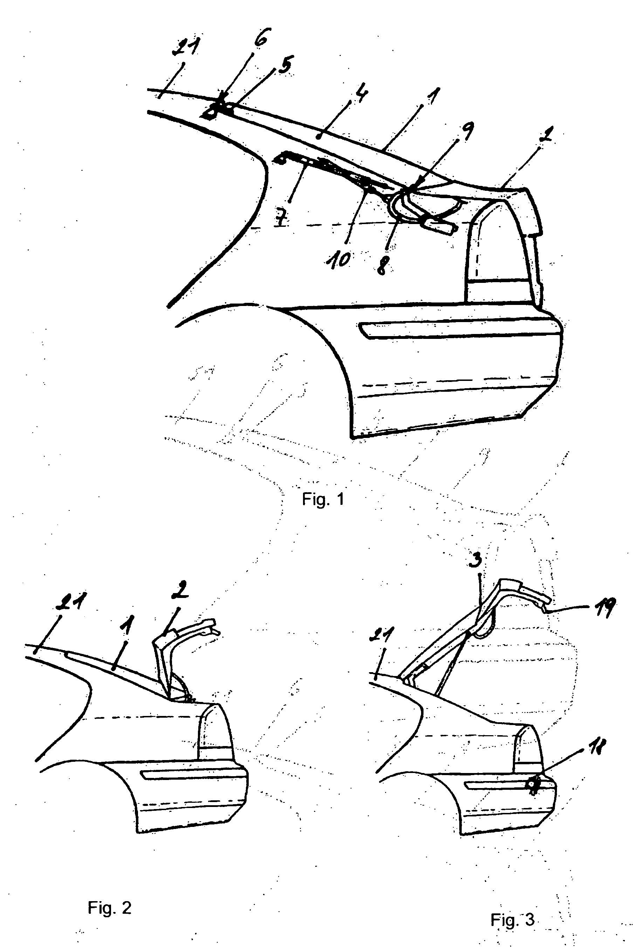

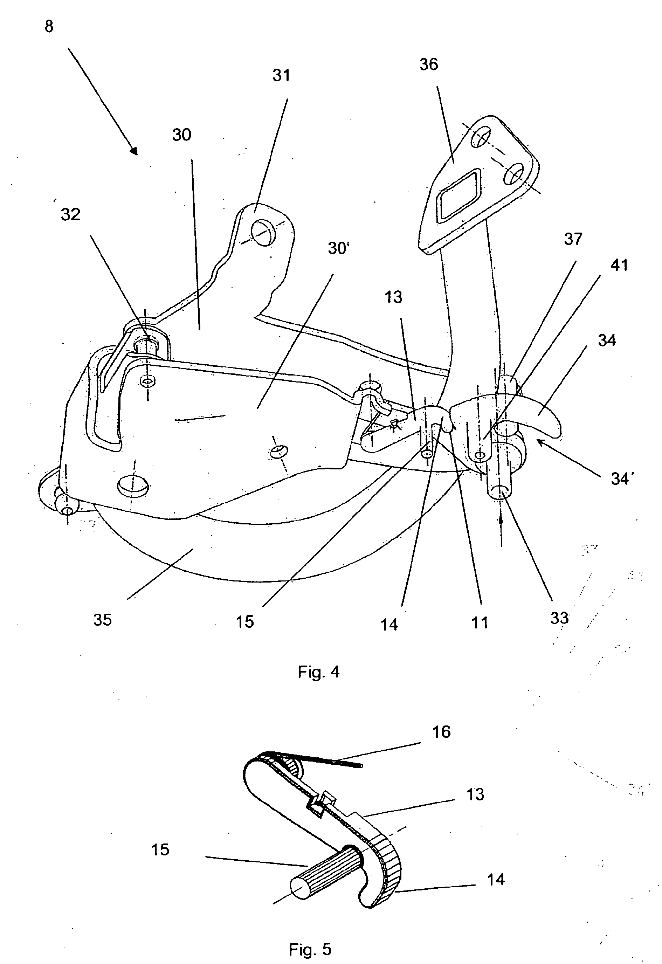

Die Aufklappbare Fahrzeugheckklappe 3 nach Abb. 1 bis 3 umfasst den Oberteil 1 und den Unterteil 2. Der Unterteil 2 hat am unteren Rand den unteren Schloss 19 für Einfangen der Öse 18, die an hinterer Schwelle des Kofferraums der Karosserie 21 angebracht ist. Der Oberteil 1 ist mit Verglasung 4 versehen und mittels des ersten Paars der einachsigen Aufhängungen 5 aufklappbar um die Achse 6 zur Karosserie 21 befestigt. Zwischen Karosserie 21 und dem Oberteil 1 ist das erste Gasdruckfederpaar 7 angeordnet. Am unteren Rand des Oberteils 1 ist mittels des zweiten Paars der einachsigen Aufhängungen 8 aufklappbar um die Achse 9 der Unterteil 2 gelagert. Zwischen dem Oberteil 1 und dem Unterteil 2 ist das zweite Gasdruckfederpaar 10 angeordnet. An jeder Seite der aufklappbaren Fahrzeugheckklappe 3 ist zur Karosserie der Betätigungsmechanismus 24 befestigt, der einerseits für Schließen des Oberteils 1 zur Karosserie 21 und andererseits für Betätigung des Schließens des Unterteils 2 zum Oberteil 1 bestimmt ist. Das Schließen des Oberteils 1 zur Karosserie 21 kann nicht unabhängig vom Schließen des Unterteils 2 zum Oberteil 1 betätigt werden.
Auf Abb. 4 ist die Aufhängung 8 dargestellt, die den Oberteil 1 und Unterteil 2 der aufklappbaren Fahueugheckklappe 3 verbindet. Die Aufhängung 8 wird durch Doppelrahmen 30 gebildet, der mittels des Halters 31 zum Oberteil 1 angeschraubt ist, zwischen dessen Außenteil 30' und Innenteil 30 drehbar um Zapfen 32 der Arm 35, der die Form Buchstabe U erweist, angebracht ist. Der Arm 35 ist mittels der Platte 36 zum Unterteil 2 angeschraubt. Beide Teile des Rahmens 30, 30' sind im unteren Teil mit Zapfen verbunden, an dem von Außenseite des Rahmens, an der zur Karosserie zugewandten Seite, das Sicherungselement 34 drehbar gelagert ist. Der Zapfen übergeht an der Außenseite des Sicherungselementes 34 in den mit ihm achsgleichen Zapfen 33. Das Sicherungselement 34 erweist die Längsausnehmung 34', die mit dem zum Rahmen 35 befestigten Zapfen 37 korrespondiert. An Außenseite des Sicherungselements 34 ist der Mitnehmer 41 befestigt, der zu der Drehmomentübertragung vom Betätigungsmechanismus 24 dient. An Außenseite des Rahmens 30' ist über dem Sicherungselement 34 drehbar die Klinke 13 angebracht, die an ihrem Ende mit Nase 14 versehen ist. Die Klinke 13 wird durch die Feder 16 in der Richtung zum Sicherungselement 34 gedrückt, in dem die Ausnehmung 11 so gebildet und angebracht ist, dass sie sich unter der Nase 14 bei solcher Umdrehung des Sicherungselements befindet, bei der der Zapfen 37 durch die Längsausnehmung 34' aufgefangen ist und sich auf deren geschlossenes Ende stützt. Die Feder 16 kann durch geeignete Gestaltung und Material der Klinke ersetzt werden. In diesem Fall muss die Klinke nicht unbedingt auf dem Rahmenu drehbar gelagert werden, aber kann auch fest gelagert sein und die Funktion der Feder durch ihre Elastizität ersetzen. Die Klinke 13 ist an ihrer zum Betätigungsmechanismus 24 zugewandten Seite mit Zapfen 15 versehen, der beim Schließen des Deckels an die Abdeckung 23 des Betätigungsmechanismus noch vor dessen völliger Schließung anliegt. Die Abdeckung 23 kann separater Teil oder verbunden mit z.B. einem Teil der Innenbekleidung des Kofferraums sein.

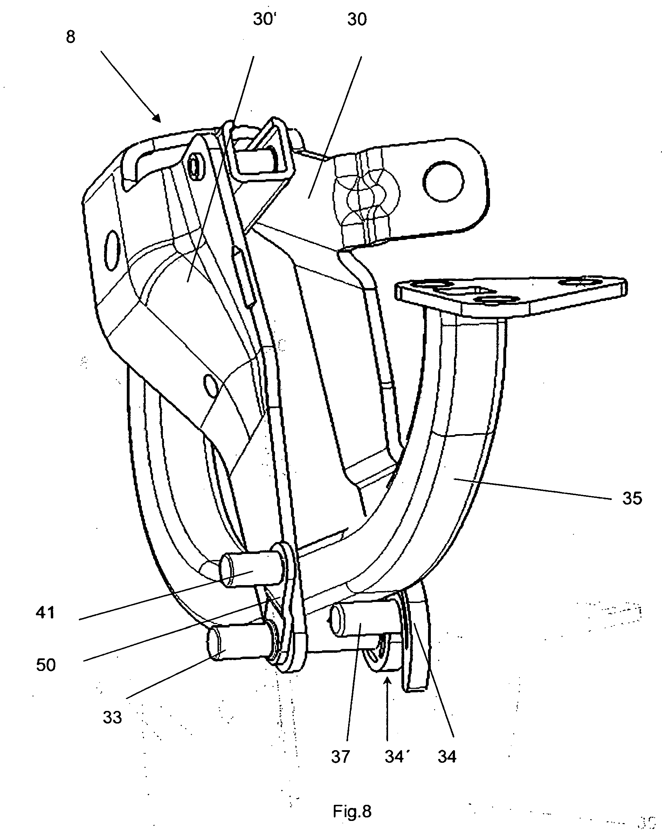

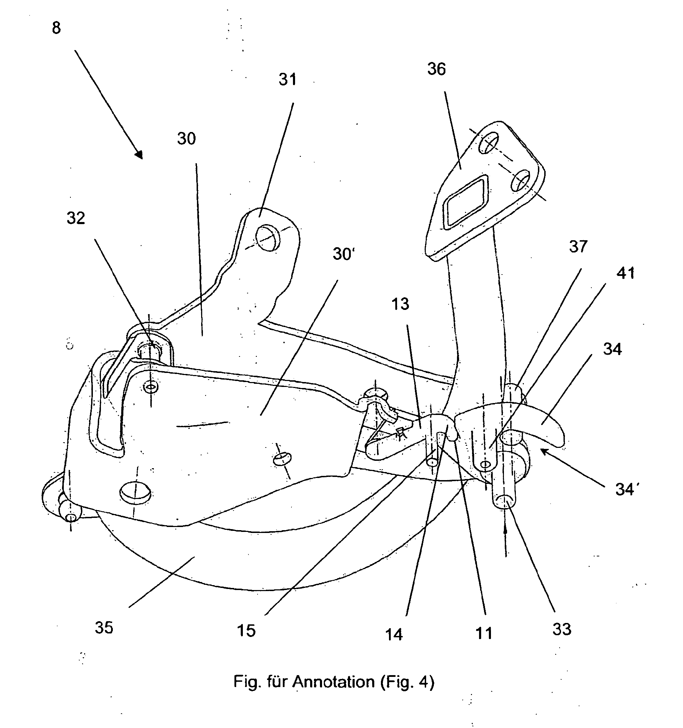

Bei geschlossener Heckklappe 3 wird die Klinke 13 durch den Zapfen 15, der sich auf die Abdeckung 23 stützt aufgehoben, deren Nase 14 über die Ausnehmung 11 aufgehoben wird, das Sicherungselement 34 ist gelöst.
Bei Forderung auf Öffnen nur des Unterteils 2 der Heckklappe wird mittels des Betätigungsmechanismus 24 über Mitnehmer 41 der Zapfen 37 in die auslösende Position gedreht, der Arm 35 wird gegenüber dem Rahmen 30 gelöst und durch Aufklappen um Zapfen 32 kann der Unterteil 2 der Heckklappe geöffnet werden, wobei der Oberteil 1 geschlossen bleibt. Der Betätigungsmechanismus 24 fängt den Zapfen 33 und auch den Mitnehmer 41 auf und hält dadurch den Rahmen 30 resp. Oberteil 1 der Heckklappe in geschlossener Position.
Bei Forderung auf Öffnen der ganzen aufklappbaren Fahrzeugheckklappe 3 wird der Betätigungsmechanismus 24 über Mitnehmer 41 durch Sicherungselement 34 an andere Seite gedreht, bis der Zapfen 37 an Ende der Längsausnehmung 34' aufliegt. Nach Entsicherung des unteren Schlosses 19 wird beim Aufheben der Heckklappe 3 der Rahmen 30 einschließlich Klinke 13 gegenüber der Karosserie aufgehoben, der Zapfen 15 wird nicht mehr durch die Abdeckung 23 aufgehoben und verhindert nicht die Bewegung der Klinke, die durch Wirkung der Feder 16 in die Ausnehmung 11 ineinander greift und die Verdrehung des Sicherungselements 34 verhindert. Es kann also nicht zu Entsicherung der Verbindung des Armes 35 und des Rahmens 30 und zum "Bruch" der aufklappbaren Fahrzeugheckklappe 3 kommen. Beim deren Schließen liegt zuerst der Zapfen 15 auf die Abdeckung 23 noch vor völliger Schließung auf und bei weiterem Schließen hebt er die Klinke 13 auf, weg von Engriff in der Ausnehmung 11. Nach völligem Aufliegen des Zapfens 33 in den Betätigungsmechanismus 24 ist die Nase 14 bereits völlig aus dem Griff ausgefahren. Die Größe des Vorsprungs des Aufliegens des Zapfens 15 vor völliger Schließung der Heckklappe 3 ist vorteilhaft möglichst klein zu wählen, nur mit Rücksicht auf nötigen Hub der Klinke 13 im Raum der Nase 14 so, dass das Sicherungselement 34 auf möglichst langem Weg gesichert ist.
Auf Abb. 8 ist andere Ausführung der Aufhängung dargestellt, bei der die Lösung nach dieser Erfindung appliziert werden kann. Das Sicherungselement 34 ist hier nicht außen des Außenteils des Rahmens 30' angebracht, aber neben dem Innenteil des Rahmens 30. Der Mitnehmer 41 ist nicht direkt am Teil des Sicherungselements 34, der die Längsausnehmung 34' bildet, angebracht, aber durch Hebel 50 getragen wird, der außen des Außenteiles des Rahmens 30' gelagert wird und zu dem Sicherungselement 34 undrehbar angeschlossen ist. Die Klinke, hier nicht dargestellt, kann an analogischer Stelle des Außenrahmens 30' wie im vorherigen Fall angebracht werden, sichert aber den Hebel 50 gegen Verdrehung. Der Hebel 50 kann in sich eine Ausnehmung für Aufnahme der Klinkennase hergestellt haben oder kann die Klinke direkt für geeignet geformten Rand des Hebels 50 ineinander greifen.

### Bezugszeichenverzeichnis

- 1: Oberteil
- 2: Unterteil
- 3: Aufklappbare Fahrzeugheckklappe
- 4: Verglasung
- 5: Erste einachsige Aufhängung
- 6: Achse der ersten Aufhängung
- 7: Erste Gasdruckfeder
- 8: Zweite einachsige Aufhängung
- 9: Achse der zweiten Aufhängung
- 10: Zweite Gasdruckfeder
- 11: Ausnehmung
- 13: Klinke
- 14: Klinkennase
- 15: Zapfen
- 16: Feder
- 18: Öse
- 19: Unterer Schloss
- 21: Karosserie
- 23: Abdeckung des Betätigungsmechanismus
- 24: Betätigungsmechanismus
- 30, 30': Festarm
- 31: Halter mit Öse
- 32: Zapfen der Aufhängung
- 33: Zapfen des Sicherungselements
- 34: Sicherungselement
- 35: Arm
- 36: Platte
- 37: Zapfen
- 41: Mitnehmer
- 50: Hebel

## Patentansprüche

1. Aufhängung für eine geteilte aufklappbare Fahrzeugheckklappe, die durch einen Rahmen (30, 30'), der an einem Oberteil (1) der aufklappbaren Fahrzeugheckklappe (3) befestigt werden kann, und einen Arm (35), der an einem Unterteil (2) der aufklappbaren Fahrzeugheckklappe (3) befestigt werden kann und der drehbar zum Rahmen (30, 30') befestigt ist, gebildet ist, wobei der Arm (35) mit einem Zapfen (37) und der Rahmen mit einem drehbaren Sicherungselement (34) mit einer Längsausnehmung (34') für die Aufnahme des Zapfens (37) versehen ist, wobei das Sicherungselement (34) mit einem Mitnehmer (41) für eine Drehmomentübertragung einer Betätigungseinrichtung (24), die an der Fahzeugkarosserie angebracht ist, versehen ist, **dadurch gekennzeichnet, dass** sie eine Sicherheitseinrichtung für die Sicherung des Sicherungselements (34) gegen Umdrehung mindestens beim Öffnen der ganzen Fahrzeugheckklappe enthält.

2. Aufhängung für eine geteilte aufklappbare Fahrzeugheckklappe nach Anspruch 1,
**dadurch gekennzeichnet, dass** die Sicherheitseinrichtung das Sicherungselement (34) in der Position sichert, in der sich der Zapfen (37) im Raum des geschlossenen Endes der Längsausnehmung (34') befindet.

3. Aufhängung für eine geteilte aufklappbare Fahrzeugheckklappe nach Anspruch 1,
**dadurch gekennzeichnet, dass** die Sicherheitseinrichtung eine Klinke (13) aufweist, die am Rahmen (30, 30') angeschlossen und mit einem elastischem Element (16), das sie in eine gesicherte Position verschiebt, versehen ist.

4. Aufhängung für eine geteilte aufklappbare Fahrzeugheckklappe nach Anspruch 3,
**dadurch gekennzeichnet, dass** die Klinke (13) beim Schließen wenigstens des Oberteils (1) der aufklappbaren Fahrzeugheckklappe (3) in eine entsicherte Position verschoben ist.

5. Aufhängung für eine geteilte aufklappbare Fahrzeugheckklappe nach einem der Ansprüche 3 oder 4,
**dadurch gekennzeichnet, dass** die Klinke (13) mit einem Zapfen (15) für ein Aufliegen auf eine Abdeckung (23) der Betätigungseinrichtung beim Schließen wenigstens des Oberteils (1) der aufklappbaren Fahrzeugheckklappe (3) mit Vorsprung noch vor dessen völliger Schließung versehen ist, wobei bei nächster Verschiebung des Oberteils (1) der aufklappbaren Fahrzeugheckklappe (3) bis zu dessen völliger Schließung die Klinke (13) in eine entsicherte Position verschoben wird.

6. Aufhängung für eine geteilte aufklappbare Fahrzeugheckklappe nach einem der Ansprüche 3 bis 5,
**dadurch gekennzeichnet, dass** die Klinke (13) die Form eines einarmigen Hebels aufweist, der mit einem Ende drehbar auf dem Rahmen (30,30') gelagert ist und an dessen anderem Ende sich eine Nase (14) befindet, die in eine im Sicherungselement (34) durchgeführte Ausnehmung (11) greift.

7. Aufhangung für eine geteilte aufklappbare Fahrzeugheckklappe nach einem der Ansprüche 1 bis 5, wobei der Mitnehmer (41) am Sicherungselement (34) mittels eines Hebels (50) angeschlossen ist,
**dadurch gekennzeichnet, dass** die Klinke (13) den Hebel (50) gegen Umdrehung blockiert.

8. Geteilte aufklappbare Fahrzeugheckklappe,
**dadurch gekennzeichnet, dass** sie mit einer Aufhängung nach einem der vorherigen Ansprüche 1 bis 7 versehen ist.

9. Fahrzeug mit geteilter aufklappbarer Fahrzeugheckklappe,
**dadurch gekennzeichnet, dass** die aufklappbare Fahrzeugheckklappe mit einer Aufhängung nach einem der vorherigen Ansprüche 1 bis 7 versehen ist.

## Claims

1. Suspension mechanism for a divided, hinged vehicle tailgate, which suspension mechanism is formed by a frame (30, 30'), which can be fastened to an upper part (1) of the hinged vehicle tailgate (3), and by an arm (35), which can be fastened to a lower part (2) of the hinged vehicle tailgate (3) and which is fastened rotatably with respect to the frame (30, 30'), wherein the arm (35) is provided with a journal (37), and the frame is provided with a rotatable securing element (34) having a longitudinal recess (34') for receiving the journal (37), wherein the securing element (34) is provided with a driver (41) for transmitting the torque of an actuating device (24) attached to the vehicle body, **characterized in that** the suspension mechanism contains a safety device for securing the securing element (34) against revolving at least during the opening of the entire vehicle tailgate.

2. Suspension mechanism for a divided, hinged vehicle tailgate according to Claim 1, **characterized in that** the safety device secures the securing element (34) in the position in which the journal (37) is located in the space at the closed end of the longitudinal recess (34').

3. Suspension mechanism for a divided, hinged vehicle tailgate according to Claim 1, **characterized in that** the safety device has a latch (13) which is connected to the frame (30, 30') and is provided with an elastic element (16) which displaces said safety device into a secured position.

4. Suspension mechanism for a divided, hinged vehicle tailgate according to Claim 3, **characterized in that** the latch (13) is displaced into a released position during the closing at least of the upper part (1) of the hinged vehicle tailgate (3).

5. Suspension mechanism for a divided, hinged vehicle tailgate according to either of Claims 3 and 4, **characterized in that** the latch (13) is provided with a journal (15) for resting with a projection on a covering (23) of the actuating device during the closing at least of the upper part (1) of the hinged vehicle tailgate (3) before said upper part is fully closed, the latch (13) being displaced into a released position upon subsequent displacement of the upper part (1) of the hinged vehicle tailgate (3) until said upper part is fully closed.

6. Suspension mechanism for a divided, hinged vehicle tailgate according to one of Claims 3 to 5, **characterized in that** the latch (13) is in the form of a single-armed lever which is mounted rotatably at one end on the frame (30, 30') and at the other end thereof there is a lug (14) which engages in a recess (11) made in the securing element (34).

7. Suspension mechanism for a divided, hinged vehicle tailgate according to one of Claims 1 to 5, wherein the driver (41) is connected to the securing element (34) by means of a lever (50), **characterized in that** the latch (13) blocks the lever (50) against revolving.

8. Divided, hinged vehicle tailgate, **characterized in that** it is provided with a suspension mechanism according to one of the preceding claims.

9. Vehicle with a divided, hinged vehicle tailgate, **characterized in that** the hinged vehicle tailgate is provided with a suspension mechanism according to one of the preceding Claims 1 to 7.

## Revendications

1. Attache pour un hayon relevable de véhicule en plusieurs parties qui est formée par un cadre (30, 30') pouvant être fixé à une partie supérieure (1) du hayon relevable de véhicule (3) et par un bras (35) qui peut être fixé à une partie inférieure (2) du hayon relevable de véhicule (3) et est fixé de façon pivotante au cadre (30, 30'), le bras (35) étant pourvu d'un tenon (37) et le cadre étant pourvu d'un élément de fixation pivotant (34) doté d'un évidement oblong (34') pour recevoir le tenon (37), l'élément de fixation (34) étant pourvu d'un entraîneur (41) pour une transmission de couple d'un dispositif d'actionnement (24) disposé au niveau de la carrosserie de véhicule, **caractérisée en ce que** l'attache contient un dispositif de sécurité pour la fixation de l'élément de fixation (34) en vue d'empêcher toute rotation au moins lors de l'ouverture de l'ensemble du hayon de véhicule.

2. Attache pour un hayon relevable de véhicule en plusieurs parties selon la revendication 1, **caractérisée en ce que** le dispositif de sécurité bloque l'élément de fixation (34) dans une position dans laquelle le tenon (37) se trouve dans la zone de l'extrémité fermée de l'évidement oblong (34').

3. Attache pour un hayon relevable de véhicule en plusieurs parties selon la revendication 1, **caractérisée en ce que** le dispositif de sécurité comporte un cliquet (13) raccordé au cadre (30, 30') et pourvu d'un élément élastique (16) se déplaçant dans une position bloquée.

4. Attache pour un hayon relevable de véhicule en plusieurs parties selon la revendication 3, **caractérisée en ce que** le cliquet (13) est poussé dans une position débloquée lors de la fermeture de la partie supérieure (1) au moins du hayon relevable de véhicule (3).

5. Attache pour un hayon relevable de véhicule en plusieurs parties selon l'une quelconque des revendications 3 ou 4, **caractérisée en ce que** le cliquet (13) est pourvu d'un tenon (15) pour reposer sur un couvercle (23) du dispositif d'actionnement lors de la fermeture de la partie supérieure (1) au moins du hayon relevable de véhicule (3) avec un avancement avant sa fermeture complète, sachant qu'au déplacement suivant de la partie supérieure (1) du hayon relevable de véhicule (3) jusqu'à sa fermeture complète, le cliquet (13) est poussé dans une position débloquée.

6. Attache pour un hayon relevable de véhicule en plusieurs parties selon l'une quelconque des revendications 3 à 5, **caractérisée en ce que** le cliquet (13) prend la forme d'un levier à un bras qui est disposé avec une extrémité de façon pivotante sur le cadre (30, 30') et au niveau de l'autre extrémité duquel se trouve un nez (14) s'engrenant dans un évidement (11) introduit dans l'élément de fixation (34).

7. Attache pour un hayon relevable de véhicule en plusieurs parties selon l'une quelconque des revendications 1 à 5, l'entraîneur (41) étant raccordé à l'élément de fixation (34) à l'aide d'un levier (50), **caractérisée en ce que** le cliquet (13) bloque le levier (50) pour l'empêcher de tourner.

8. Hayon relevable de véhicule en plusieurs parties, **caractérisé en ce qu'**il est pourvu d'une attache selon l'une quelconque des revendications 1 à 7.

9. Véhicule doté d'un hayon relevable de véhicule en plusieurs parties, **caractérisé en ce que** le hayon relevable de véhicule est pourvu d'un attache selon l'une quelconque des revendications 1 à 7.
